# EUROPÄISCHE PATENTSCHRIFT

(11) **EP 3 300 870 B1**
(45) Veröffentlichungstag und Bekanntmachung des Hinweises auf die Patenterteilung: **10.11.2021**
(21) Anmeldenummer: 17189871.1
(22) Anmeldetag: 07.09.2017
(51) Int. Cl.: B28B 7/00, A01K 1/015, B28B 7/18

(54) **VERFAHREN UND VORRICHTUNG ZUR HERSTELLUNG EINES LÄNGSSPALTENROSTELEMENTS**
METHOD AND DEVICE FOR PRODUCING A LONGITUDINAL SLOT ELEMENT
PROCÉDÉ ET DISPOSITIF DE FABRICATION D'UN ÉLÉMENT DE GRILLE À COLONNES LONGITUDINALES

(30) Priorität: 07.09.2016 DE 102016116703
(43) Veröffentlichungstag der Anmeldung: 04.04.2018
(73) Patentinhaber: Betonwerk Schwarz GmbH, 84513 Töging am Inn (DE)
(72) Erfinder: SCHWARZ, Rudolf, 84543 Winhöring (DE)
(74) Vertreter: Lambacher, Michael

(56) Entgegenhaltungen:
- EP-A1- 1 563 728
- EP-A2- 1 916 080
- CA-A1- 2 324 134
- CH-A- 86 139
- JP-A- 2011 037 649

## Beschreibung

Die Erfindung betrifft Längsspaltenrostelemente für Tierställe. Konkret wird ein Verfahren sowie eine Vorrichtung zur Herstellung derartiger Längsspaltenrostelemente aus Beton beschrieben.

### Hintergrund

Vorgefertigte Längsspaltenrostelemente aus Beton, die in einem Tierstall (z.B. Stall für Kühe) zur Erzeugung eines Bodens ausgelegt werden, sind hinreichend bekannt. Derartige Längsspaltenrostelemente bestehen aus zwei oder mehreren voneinander beabstandeten und in einer Ebene angeordneten Längsbalken sowie zwei oder mehreren voneinander beabstandeten und in der Ebene der Längsbalken angeordneten Querbalken. Durch jeweils zwei benachbarte Längsbalken und Querbalken wird ein Längsspalt definiert, welcher zur Entsorgung von Tierkot und Tierurin vorgesehen ist. Tierböden aus vorgefertigten Längsspaltenrostelementen können, bedingt durch am Boden angesammelten Kot und Urin, glitschig werden. Es besteht somit die Gefahr, dass Tiere beim Gehen über die glatte Bodenoberfläche ausrutschen und sich verletzen.

Durch Anbringen von Oberflächenstrukturen auf der Betonoberfläche der Längsspaltenrostelemente kann die Bodengriffigkeit erheblich verbessert werden. Hinsichtlich der Anbringung von Oberflächenstrukturen gibt es verschiedene Ansätze. So ist beispielsweise aus der EP 1 563 728 B1 ein Längsspaltenrostelement, gemäß dem Oberbegriff des Anspruchs 19 und ein Verfahren zur Herstellung von vorgefertigten Längsspaltenrostelementen aus Beton zum Auslegen in einem Tierstall bekannt, bei dem auf der Oberfläche der Längsspaltenrostelemente Rillen eingeschnitten oder eingefräst werden. Der Schneid- oder Fräsvorgang wird hierbei nach Entschalen der Längsspaltenrostelemente und bei partiell ausgehärtetem Beton durchgeführt. Die so erzeugten Rillen erstrecken sich in Längsrichtung der Längsbalken und sind im Querschnitt rechteckförmig ausgebildet. Das Schneiden von Rillen kann das Betongefüge des teilweise ausgehärteten Betons schädigen, wodurch die mechanische Festigkeit der Rostelemente sinkt. Ferner können scharfe Schneid- oder Fräskanten entstehen, welche zu Verletzungen bei den Tieren führen können.

Aus der EP 2 138 289 A1 ist ferner ein Verfahren zur Herstellung von Längsspaltenrostelementen bekannt, bei dem die Oberfläche der Längsspaltenrostelemente mit einem Gummibelag versehen wird. Der Gummibelag kann hierbei eine Oberflächenstruktur (wie beispielsweise Oberflächenrillen) aufweisen. Der Gummibelag wird beim Herstellen der Längsspaltenrostelemente in den frischen Beton teilweise eingedrückt. Das Anbringen der Gummielemente erfordert eine gründliche Überwachung des Herstellungsprozesses. Insbesondere muss darauf geachtet werden, dass der beim Eindrücken des Gummibelags verdrängte Beton aus der Betongussform abfließen kann.

Aus der JP 2011 037649 A ist eine Vorrichtung zur Herstellung eines Längsspaltenrostelements aus Beton, gemäß dem Oberbegriff des Anspruchs 12 und ein Verfahren zum Herstellen eines Längsspaltenrostelements aus Beton bekannt, bei dem eine ein Längsspaltenrostelement nachbildende Gussform auf einen Rütteltisch positioniert wird und die Gussform mit Beton gefüllt wird. Die Oberfläche des so erzeugten Längsspaltenrostelements ist glatt und weist keine Oberflächenstruktur auf. Aus der EP 1 916 080 A2 ist ferner ein Verfahren zur Formgestaltung von Betonsteinen oder Betonplatten bekannt, bei dem mit Hilfe eines Stempels oder einer Matrize eine Strukturierung der gesamten Oberfläche des Betonsteins oder der Betonplatte vorgenommen wird, und anschließend die Oberfläche mittels Flüssigkeiten oder Festkörpern gestrahlt wird.

Aufgabe der vorliegenden Erfindung ist es, eine technisch einfach zu realisierende und kostengünstige Technik zur Herstellung von Längsspaltenrostelementen bereitzustellen. Es ist ferner Aufgabe der vorliegenden Erfindung, Längsspaltenrostelemente mit verbesserten Oberflächeneigenschaften und verbesserter Festigkeit herzustellen.

### Kurzer Abriss

Zur Lösung der Aufgaben wird gemäß einem ersten Aspekt ein Verfahren zum Herstellen eines Längsspaltenrostelements aus Beton bereitgestellt, das wenigstens zwei voneinander beabstandete und in einer Ebene angeordnete Längsbalken und wenigstens zwei voneinander beabstandete und in der Ebene der Längsbalken angeordnete und die wenigstens zwei Längsbalken kreuzende Querbalken umfasst, wobei durch zwei benachbarte Längsbalken und zwei benachbarte Querbalken jeweils ein Längsspalt definiert ist. Das Verfahren umfasst die folgenden Schritte: Bereitstellen einer Gussform auf einem Rütteltisch, wobei die Gussform nach oben offene Gussräume aufweist, welche die Form der Längsbalken und Querbalken vorgeben; Füllen der offenen Gussräume mit Beton zur Formung der Längsbalken und Querbalken; Rütteln der Gussform während des Füllvorgangs, um eine gleichförmige Betonverteilung in den Gussräumen zu erreichen; Erzeugen einer Oberflächenstruktur wenigstens entlang der Längsbalken, indem an der freiliegenden Oberfläche der Längsbalken wenigstens ein eine Oberflächenstruktur erzeugendes Prägeelement in den Beton der Längsbalken lokal eingedrückt wird, wobei die Oberflächenstruktur durch Ausüben einer Vibrationsbewegung auf das wenigstens eine Prägeelement erzeugt wird; Entfernen des wenigstens einen in den Beton eingedrückten Prägeelements; und Lösen des so geformten Längsspaltenrostelements von der Gussform.

Durch das Eindrücken und Entfernen des wenigstens einen Prägeelements kann an der freiliegenden Betonoberfläche eine Oberflächenstruktur in Form lokaler Vertiefungen (wenigstens entlang der Längsbalken) realisiert werden. Auf diese Weise kann die Bodengriffigkeit verbessert werden. Zur Erzeugung der lokalen Vertiefungen kann das wenigstens eine Prägeelement nach Beendigung des Füll- und Rüttelvorgangs in den frischen Beton (kurz "Frischbeton") eingedrückt werden. Ferner kann das in den Beton eingedrückte wenigstens eine Prägeelement noch vor teilweiser Aushärtung des Frischbetons wieder entfernt werden. Die Eindrückzeit, d.h. die Zeitspanne, innerhalb der das wenigstens eine Prägeelement im Beton eingedrückt bleibt, kann auf eine kurze Zeitspanne begrenzt bleiben. Diese kann im Bereich von wenigen Sekunden bis mehreren Minuten liegen.

Mit Frischbeton oder frischem Beton kann ein Beton im erdfeuchten Zustand gemeint sein. Damit frischer Beton nach Entfernen des wenigstens einen Prägeelements nicht in die eingedrückten Vertiefungen fließt und diese verschüttet, können Beton oder Betonmischung zum Einsatz kommen, die im erdfeuchten Zustand eine hohe Formstabilität aufweisen.

Mit freiliegender Oberfläche des Längsspaltenrostelements kann die in der Gussform von oben frei zugängliche Oberfläche des Längsspaltenrostelements gemeint sein.

Der Eindrückvorgang kann mechanisch oder elektromechanisch erfolgen. Gemäß einer Variante kann am wenigstens einen Prägeelement eine Druckkraft derart angelegt werden, dass das Prägeelement an der freiliegenden Betonoberfläche in den Beton eingedrückt wird. Erfindungsgemäß wird eine oszillatorische Vibrationsbewegung auf das wenigstens eine Prägeelement ausgeübt. Auf diese Weise kann das wenigstens eine Prägeelement besonders schonend in den Beton eingedrückt werden.

Die freiliegende Oberfläche des Längsspaltenrostelements kann zusätzlich zu der hier beschriebenen Strukturierung durch Eindrücken von Vertiefungen weiter aufgeraut werden. In diesem Fall kann das Verfahren einen zusätzlichen Verfahrensschritt zum Aufrauen der Oberfläche des Längsspaltenrostelements umfassen. Der Verfahrensschritt des Aufrauens der Oberfläche des Längsspaltenrostelements kann hierbei ein Einstreuen der Oberfläche mit Quarzsand oder Split umfassen. Alternativ kann der Verfahrensschritt des Aufrauens auch ein Durchführen eines Besenstrichs umfassen. Mit Besenstrich kann ein Aufrauen der Oberfläche gemeint sein, bei dem ein Besen entlang einer festgelegten Richtung gleichförmig über die Oberfläche des Frischbetons gezogen wird.

Das wenigstens eine Prägeelement kann derart ausgestaltet und dimensioniert sein, dass es beim Eindrückvorgang die Oberfläche des Längsspaltenrostelements lediglich an den Eindrückstellen verformt (vertieft). Hingegen können Oberflächenbereiche des Längsspaltenrostelements, welche die Eindrückstellen umgeben, durch den Eindrückvorgang unberührt bleiben. Somit wird eine auf die Eindrückstellen begrenzte, lokale Verformung (Vertiefung) erreicht.

Ferner kann das wenigstens eine Prägeelement (in Eindrückrichtung und in einer Ebene senkrecht zur Eindrückrichtung) derart dimensioniert sein, dass es beim Eindrückvorgang ein Betonvolumen verdrängt, das im Vergleich zum Betonvolumen des Längsrostspaltelements vernachlässigbar ist. Verdrängungseffekte, wie beispielsweise ein Aufwölben der Oberfläche in unmittelbarer Umgebung der Vertiefungen bedingt durch Betonverdrängung beim Eindrückvorgang sind vernachlässigbar. Insbesondere müssen keine Vorkehrungen getroffen werden, um die verdrängte Betonmenge aus den Gussformen abfließen zu lassen.

Der Schritt des Erzeugens einer Oberflächenstruktur kann ferner ein dem Eindrücken vorausgehendes Ausrichten (Orientieren) des wenigstens einen Prägeelements relativ zur freiliegenden Oberfläche des Längsspaltenrostelements umfassen. Der Ausrichtvorgang kann ein Ausrichten des wenigstens einen Prägeelements bezüglich der Längsbalken und/oder Querbalken umfassen. Durch den Ausrichtevorgang wird somit die Ausrichtung der eingedrückten Vertiefungen in den Längsbalken und/oder Querbalken festgelegt. Beispielsweise kann das wenigstens eine Prägeelement derart ausgerichtet sein, dass jede der eingedrückten Vertiefungen parallel, senkrecht oder in einem vorgegeben Winkel zur Längsrichtung der Längsbalken (im Folgenden Längsbalkenrichtung) angeordnet ist. Es ist auch denkbar, dass die eingedrückten Vertiefungen in Längsbalkenrichtung unterschiedliche Orientierungen aufweisen können.

Das wenigstens eine Prägeelement kann derart ausgebildet sein, dass die durch das wenigstens eine Prägeelement eingedrückte Vertiefung eine Rille mit geradliniger oder kurvenförmiger Linienform ist. Alternativ kann die Rille eine Zick-Zack-Linienform aufweisen. Unabhängig von der konkreten Linienform kann jede Rille einen dreieckförmigen Querschnitt aufweisen (dreikantige Rille). Die dreieckförmige Rille kann eine im Beton eingedrückte Spitze aufweisen, welche einen Winkel im Bereich zwischen 45° und 90°, vorzugsweise einen Winkel von ungefähr 60°, einschließt.

Gemäß einer Variante kann die Oberflächenstruktur wenigstens zwei Rillen pro Längsbalken aufweisen, welche voneinander beabstandet angeordnet sind. Es versteht sich, dass anstelle von zwei Rillen auch drei, vier oder mehr Rillen pro Längsbalken realisierbar sind. Die wenigstens zwei Rillen können mit Hilfe eines einzigen Eindrückschritts (also gleichzeitig) erzeugt werden. Alternativ ist auch vorstellbar, dass die wenigstens zwei Rillen sequentiell, also durch Durchführen mehrerer hintereinander folgender Eindrückschritte erzeugt werden.

Der Schritt des Lösens des Längsspaltenrostelements von der Gussform kann folgende Unterschritte umfassen: Drehen der Gussform, so dass die freiliegende Oberfläche des Längsspaltenrostelements mit den eingedrückten Oberflächenstrukturen nach unten zeigt; und anschließendes Entschalen des Längsspaltenrostelements nach unten aus der Gussform.

Gemäß einem zweiten Aspekt wird eine Vorrichtung zur Herstellung eines Längsspaltenrostelements aus Beton bereitgestellt, das wenigstens zwei voneinander beabstandete und in einer Ebene angeordnete Längsbalken und wenigsten zwei voneinander beabstandete und in der Ebene der Längsbalken angeordnete und die wenigstens zwei Längsbalken kreuzende Querbalken umfasst, wobei durch zwei benachbarte Längsbalken und zwei benachbarte Querbalken jeweils ein Längsspalt definiert ist, wobei die Vorrichtung umfasst: eine Gussform mit der Form des Längsspaltenrostelements entsprechenden, nach oben offenen Gussräumen, welche dazu vorgesehen sind, den bei einem Füllvorgang bereitgestellten Beton aufzunehmen; einen Rütteltisch, auf den die Gussform aufgelegt ist, wobei der Rütteltisch dazu ausgebildet ist, die Gussform während des Füllvorgangs zu rütteln, um eine gleichförmige Betonverteilung in den Gussräumen zu erreichen; und eine Eindrückeinrichtung mit wenigstens einem Prägeelement, wobei die Eindrückeinrichtung dazu vorgesehen ist, das wenigstens eine Prägeelement in den Beton der Längsbalken lokal einzudrücken, um eine Oberflächenstruktur an der freiliegenden Oberfläche der Längsbalken zu erzeugen, wobei die Vorrichtung ferner Mittel zum Ausüben einer Vibrationsbewegung auf das wenigstens eine Prägeelement umfasst, um die Oberflächenstruktur zu erzeugen.

Das wenigstens eine Prägeelement kann derart dimensioniert sein, dass es beim Eindrückvorgang ein Betonvolumen verdrängt, das im Vergleich zum mit Beton ausgefüllten Volumen des Längsspaltenrostelements vernachlässigbar ist. Das wenigstens eine Prägeelement kann stabförmig ausgebildet sein mit einer vorgegebenen Längen-, Breiten- und Tiefenabmessung. Das wenigstens eine stabförmige Prägeelement kann einen dreieckförmigen Querschnitt aufweisen oder wenigstens eine Spitze mit dreieckförmigen Querschnitt umfassen. Die Spitze des dreieckförmigen Prägeelements kann hierbei einen Winkel im Bereich von 45° bis 90°, vorzugsweise einen Winkel von ungefähr 60°, bilden.

Gemäß einer Variante kann die Eindrückeinrichtung ein einziges Prägeelement aufweisen. Gemäß einer alternativen Variante kann die Eindrückeinrichtung wenigstens zwei voneinander beabstandet angeordnete Prägeelemente aufweisen. Auf diese Weise können pro Eindrückvorgang wenigstens zwei Vertiefungen (Rillen) an der freiliegenden Oberfläche des Längsspaltenrostelements realisiert werden.

Die Eindrückeinrichtung kann ferner eine Druckeinrichtung umfassen, welche dazu vorgesehen ist, das wenigstens eine Prägeelement mit einem (oszillierenden) Druck zu beaufschlagen. Der zu beaufschlagende Druck kann voreingestellt oder voreinstellbar sein.

Ferner kann die Eindrückeinrichtung eine Orientierungseinrichtung umfassen. Diese ist dazu vorgesehen, das wenigstens eine Prägeelemente bezüglich des Längsspaltenrostelements auszurichten.

Die Vorrichtung kann ferner eine Hubeinrichtung umfassen. Diese ist mit der Eindrückeinrichtung gekoppelt oder koppelbar und dazu vorgesehen, die Eindrückeinrichtung während des Eindrückvorgangs in Richtung des Längsspaltenrostelements abzusenken und nach Beendigung des Eindrückvorgangs wieder anzuheben.

Die Vorrichtung kann ferner eine Steuereinrichtung umfassen, welche dazu vorgesehen ist, die Eindrückeinrichtung und die Hubeinrichtung anzusteuern, um den Eindrückvorgang durchzuführen. Die Steuereinrichtung kann dazu ausgebildet sein, die Orientierungseinrichtung der Eindrückeinrichtung zur Ausrichtung des wenigstens einen Prägeelements anzusteuern. Ferner kann die Steuereinrichtung zur Ansteuerung der Hubeinrichtung zur Absenkung und/oder Anhebung der Eindrückeinrichtung vorgesehen sein.

Die Vorrichtung kann ferner eine Kippeinrichtung umfassen, welche dazu vorgesehen ist, die Gussform nach Erzeugung der Oberflächenstruktur zu drehen, so dass die freiliegende Oberfläche des Längsspaltenrostelements mit der eingedrückten Oberflächenstruktur nach unten zeigt, und anschließend entschalbar ist.

Gemäß einem dritten Aspekt wird ein Längsspaltenrostelement aus Beton bereitgestellt, welches mittels dem oben beschriebenen Verfahren und Vorrichtung herstellbar ist. Das Längsspaltenrostelement umfasst wenigstens zwei voneinander beabstandete und in einer Ebene angeordnete Längsbalken und wenigsten zwei voneinander beabstandete und in der Ebene der Längsbalken angeordnete und die wenigstens zwei Längsbalken kreuzende Querbalken, wobei durch zwei benachbarte Längsbalken und zwei benachbarte Querbalken jeweils ein Längsspalt definiert ist, wobei wenigstens die Oberfläche der Längsspalten eine oder mehrere lokale Vertiefungen (Rillen) aufweist, die jeweils ein dreieckförmiges Querschnittsprofil aufweisen, wobei die eine oder mehreren Vertiefungen an der Oberfläche durch Ausüben einer Vibrationsbewegung auf wenigstens ein dreieckförmiges Prägeelement entstanden sind.

Jede der dreieckförmigen Vertiefungen kann eine im Beton eingedrückte Spitze aufweisen, welche einen Winkel im Bereich zwischen 45° und 90°, vorzugsweise einen Winkel von ungefähr 60°, aufweist. Die Rillentiefe kann im Bereich zwischen 2-20 mm, bevorzugt im Bereich zwischen 2-10 mm, noch bevorzugter im Bereich zwischen 2-5 mm liegen.

### Kurze Beschreibung der Zeichnungen

Anhand von Zeichnungen werden Aspekte der vorliegenden Erfindung weiter erläutert. Es zeigen:
- Fig. 1: eine schematische Darstellung einer Vorrichtung zur Herstellung eines Längsspaltenrostelements gemäß der vorliegenden Erfindung;
- Fign. 2a-2b: schematische Darstellungen einer Eindrückeinrichtung gemäß der vorliegenden Erfindung;
- Fig. 3: ein Flussdiagramm eines Verfahrens zum Herstellen eines Längsspaltenrostelements gemäß der vorliegenden Erfindung;
- Fign. 4a-4b: eine schematische Darstellung des Eindrückvorgangs zur Strukturierung der Oberfläche eines Längsspaltenrostelements; und
- Fign. 5a-5e: unterschiedliche Varianten von Oberflächenstrukturen, die gemäß dem erfindungsgemäßen Verfahren und Vorrichtung herstellbar sind.

### Detaillierte Beschreibung

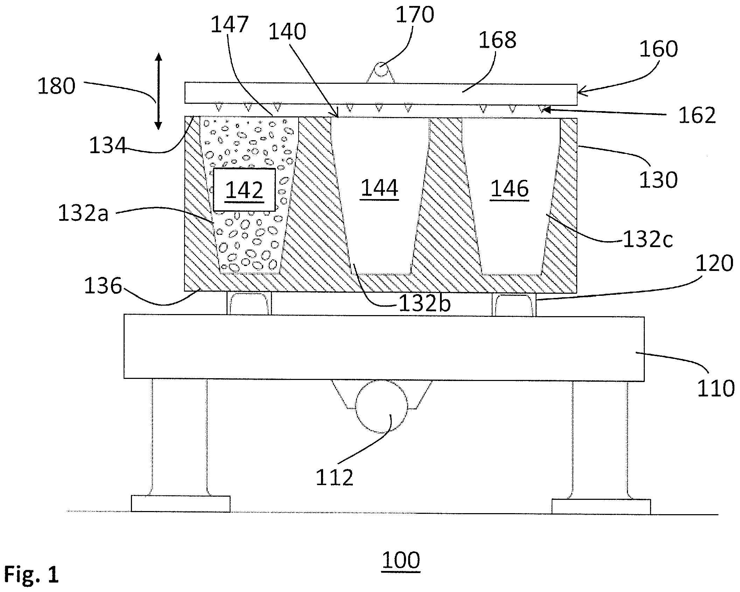

Anhand von Fig. 1 wird zunächst eine Vorrichtung 100 zur Herstellung eines Längsspaltenrostelements zur Auslegung in Tierställen beschrieben. Fig. 1 zeigt einen schematischen Querschnitt der Vorrichtung 100. Die Vorrichtung 100 umfasst einen Rütteltisch 110 mit einem Rüttelmotor 112, eine auf dem Rütteltisch 110 angeordnete Gussform 130 mit mehreren Gussräumen 132a, 132b, 132c sowie eine über der Gussform 130 angeordnete Eindrückeinrichtung 160. Die Vorrichtung 100 kann optional auch eine Auflageeinrichtung 120 umfassen, welche zwischen dem Rütteltisch 110 und einem Boden 136 der Gussform 130 angeordnet ist und zur Auflage der Gussform 120 vorgesehen ist. Es versteht sich, dass gemäß einer alternativen Variante die Vorrichtung 100 auch direkt auf dem Rütteltisch 110 aufliegen kann. Ferner kann die Vorrichtung 100 eine mit der Eindrückeinrichtung 160 gekoppelte Hubeinrichtung umfassen, welche zum Absenken und Anheben der Eindrückeinrichtung 160 vorgesehen ist. In Fig. 1 ist lediglich ein Teil 170 der Hubeinrichtung schematisch dargestellt. Die Hub- und Absenkbewegung der Eindrückeinrichtung 160 wird in Fig. 1 durch den Pfeil 180 dargestellt.

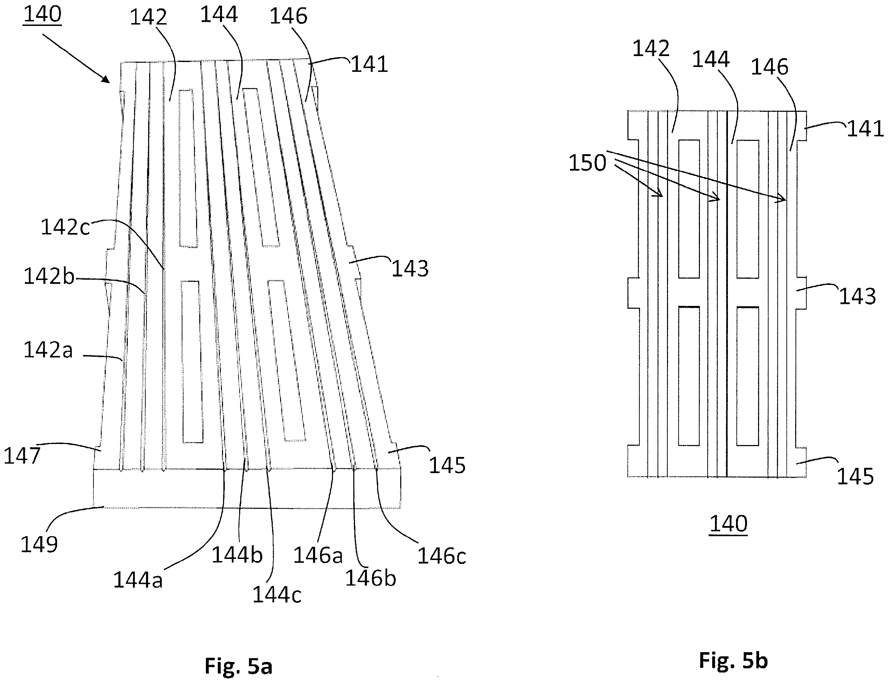

Die Gussräume 132a, 132b, 132c der Gussform 130 sind nach oben (also zur Oberfläche 134 der Gussform 130) hin offen ausgebildet. Somit können die Gussräume 132a, 132b, 132c von oben mit Frischbeton gefüllt werden. Die Gussräume 132a, 132b, 132c sind derart konstruiert, dass sie der Form des zu erzeugenden Längsspaltenrostelements entsprechen. Die in Fig. 1 beispielhaft gezeigte Gussform 130 weist drei nach oben offene Gussräume 132a, 132b, 132c mit trapezförmigen Querschnitt auf und ist dazu ausgebildet, ein Längsspaltenrostelement 140 mit drei zueinander parallel angeordneten Längsbalken 142, 144, 146 zu formen. Ein derartiges Längsspaltenrostelement 140 ist in den Fign. 5a-5e dargestellt. Es versteht sich, dass die Anzahl der Gussräume 132a, 132b, 132c sowie deren Form von der Form des zu erzeugenden Längsspaltenrostelements abhängt und von der in der Fig. 1 gezeigten Form abweichen kann. Beispielsweise kann das Längspaltenrostelements 140 abweichend von den in den Fign. 5a-5e gezeigten Ausgestaltungen auch zwei Längsbalken oder vier, fünf oder mehr Längsbalken aufweisen. Dementsprechend ist die Gussform 130 mit zwei Gussräumen oder vier, fünf oder mehr Gussräumen zur Formungen von Längsbalken ausgestattet.

Der Rütteltisch 110 ist dazu ausgebildet, eine Rüttelbewegung auszuführen. Diese wird auf die vom Rütteltisch 110 getragene Gussform 130 übertragen. Durch die Rüttelbewegung der Gussform 130 wird der in den Gussräumen 132a, 132b, 132c eingefüllte Beton in den Gussräumen 132a, 132b, 132c gleichmäßig verteilt und verdichtet.

Durch Füllen der Gussräume 132a, 132b, 132c mit Beton wird das Längsspaltenrostelement 140 ausgebildet. Wie in Fig. 1 für den Gussrau 132a exemplarisch gezeigt, werden die Gussräume 132a, 132b, 132c bis zur Gussformoberseite 134 mit Beton gefüllt. An der Gussformoberseite 134 entsteht somit eine freiliegende Oberfläche 147 des Längsspaltenrostelements 140, die mit Hilfe der Eindrückeinrichtung 160 strukturierbar ist. Die zur Strukturierung der freiliegenden Oberfläche 147 vorgesehene Eindrückeinrichtung 160 umfasst wenigstens ein Prägeelement 162 sowie eine Lagereinrichtung 168, an der das wenigstens ein Prägeelement 162 gelagert ist. Die Eindrückeinrichtung 160 ist bezüglich der auf dem Rütteltisch 110 gelagerten Gussform 130 nach unten und oben bewegbar (siehe Pfeil 180), um eine Oberflächenstruktur an der freiliegenden Oberfläche 147 zu erzeugen. Die Strukturierung der freiliegenden Oberfläche 147 mit Hilfe der Eindrückeinrichtung 160 wird nachfolgend weiter beschrieben.

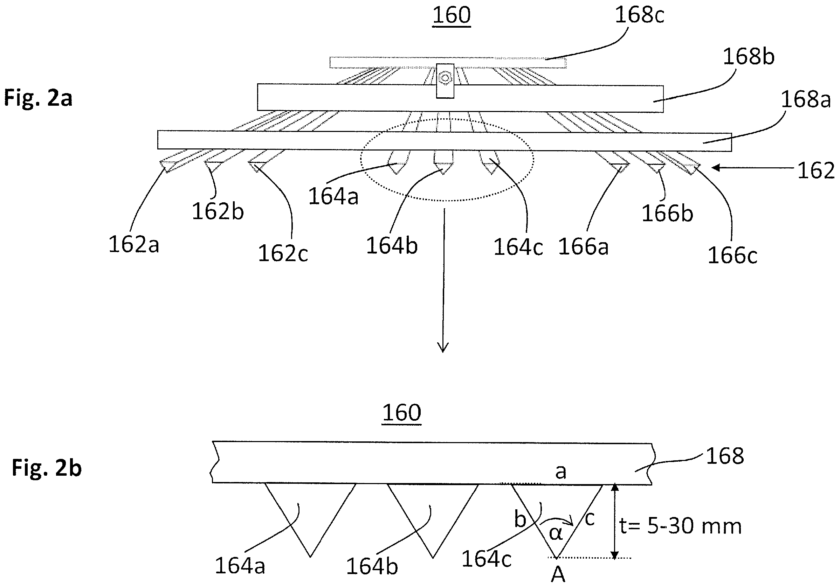

Anhand der Fign. 2a und 2b wird die Eindrückeinrichtung 160 weiter beschrieben. Fig. 2a zeigt eine dreidimensionale Ansicht der in Fig. 1 schematisch dargestellten Eindrückeinrichtung 160. Die Eindrückeinrichtung 160 umfasst insgesamt neun Prägeelemente 162a-c, 164a-c, 166a-c, wobei jeweils drei Prägeelemente zu einer Gruppe zusammengefasst sind. Innerhalb jeder Gruppe sind die Prägeelemente 162a-c. 164a-c, 166a-c voneinander beabstandet und zueiander parallel angeordnet. Jede Dreiergruppe ist für die Oberflächenstrukturierung eines der drei Längsbalken 142, 144, 146 vorgesehen. Die in Gruppen angeordneten Prägeelemente 162a, 162b, 162c sind hierbei an drei Lagerelementen 168a-c befestigt. Durch die hier beschriebene Anordnung der Prägeelemente 162a-c, 164a-c, 166a-c werden an der freiliegenden Oberfläche 147 eines jeden Längsbalken 142, 144, 146 jeweils drei parallel verlaufende Vertiefungen (Rillen) eingedrückt. Es versteht sich, dass abweichend von der hier beschriebenen Konfiguration, die Eindrückeinrichtung 160 pro Längsbalken 142, 144, 146 auch weniger oder mehr als drei Prägeelemente aufweisen kann.

Wie ferner aus Fig. 2a hervorgeht, ist jedes der Prägeelemente 162a-c, 164a-c, 166a-c als geradliniger Stab mit dreieckförmigen Querschnittprofil ausgebildet. Die dreikantigen Stäbe sind jeweils mit einer Stabkante an die Lagerelemente 168a-c gekoppelt. Die beiden verbleibenden Stabkanten bilden eine Spitze, die in den Beton eingedrückt wird, wodurch im Beton eine Rille mit dreieckförmigem Querschnitt erzeugt wird. Die Prägeelemente 162a-c, 164a-c, 166a-c können auch von der hier beschriebenen Konfiguration eines Dreikant-Stabs abweichen. Wesentlich ist nur das jedes Prägeelement an seinem in den Beton einzudrückenden Abschnitt ein dreieckförmiges Querschnittsprofil zur Erzeugung einer Dreikant-Rille im Beton aufweist. Die Länge der stabförmigen Prägeelemente 162a-c, 164a-c, 166a-c kann je nach Art der Oberflächenstrukturierung und der Dimension des Längsspaltenrostelements unterschiedlich dimensioniert sein. In der in Fig. 2a gezeigten Ausgestaltung entspricht die Länge der stabförmigen Prägeelemente 162a-c, 164a-c, 166a-c im Wesentlichen der Länge des zu strukturierenden Längsspaltenrostelements 140. Ferner können die Prägeelemente 162a-c, 164a-c, 166a-c aus Metall (z.B. Stahl, Aluminium), einer Metalllegierung, Kunststoff oder aus einem anderweitigen Material ausgebildet sein.

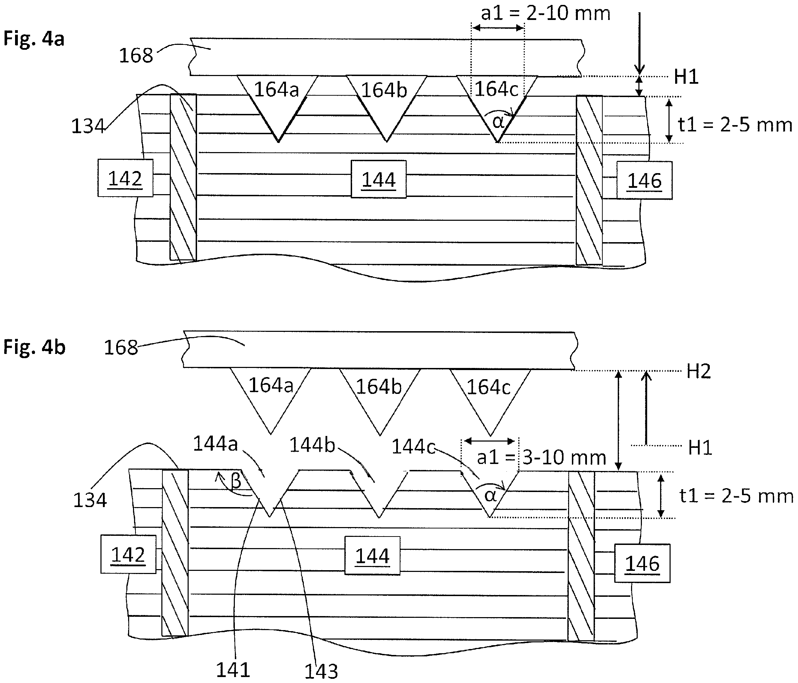

Das dreieckförmige Querschnittprofil der Prägeelemente 162a-c, 164a-c, 166a-c wird anhand von Fig. 2b weiter beschrieben. Die Prägeelemente 162a-c, 164a-c, 166a-c weisen eine nach unten zeigende Spitze A auf, die in den Beton eingedrückt wird. Eine die Spitze A bildende erste Querschnittseite b und zweite Querschnittseite c sind im Wesentlichen gleich lang und derart zueinander geneigt ausgebildet, dass sie an der Spitze A einen Winkel α einschließen, welcher im Bereich zwischen 45° und 90° liegt. Mit anderen Worten umfasst jedes Prägeelement 162a-c, 164a-c, 166a-c zwei nach unten zulaufende Seitenflächen (oder Kanten), die sich an der Spitze A treffen und einen Winkel im Bereich zwischen 45° und 90°, vorzugsweise einen Winkel von 60°, einschließen. Ferner weist die Spitze A einen Abstand zu einer der Spitze A gegenüberliegenden dritten Querschnittseite a auf (der Abstand wird im Folgenden Spitzentiefe t genannt, vgl. Fig. 2b), welcher im Bereich zwischen 5 bis 30 mm liegt. Die Querschnittseite a fungiert als Lagerseite, mittels der die Prägeelemente 162a-c, 164a-c, 166a-c mit den Lagerelementen 168a-c mechanisch verbunden sind. Die Vorteile der hier beschriebenen dreieckförmigen Ausgestaltung der Prägeelemente werden anhand der Fign. 4a und 4b weiter erläutert.

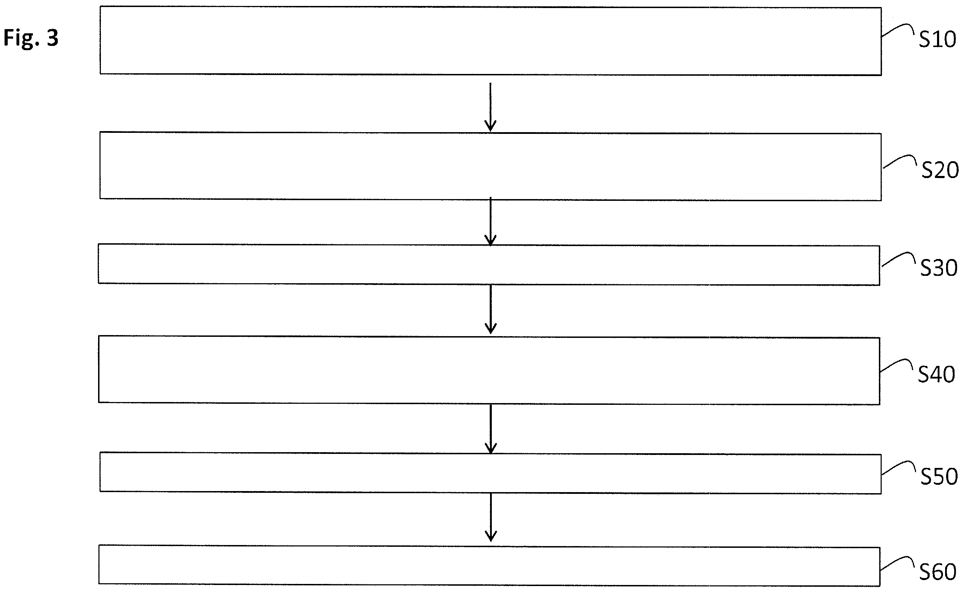

Im Zusammenhang mit der Fig. 3 wird nun ein Verfahren zum Herstellen von Längsspaltenrostelementen aus Beton weiter beschrieben. Das Verfahren wird mit Hilfe der Vorrichtung 100 in Fig. 1 durchgeführt.

In einem ersten Schritt S10 "Bereitstellen einer Gussform auf einem Rütteltisch, wobei die Gussform nach oben offene Gussräume aufweist" wird zunächst die Gussform 130 bereitgestellt und auf dem Rütteltisch 110 der Vorrichtung 100 angeordnet.

In einem darauffolgenden zweiten Schritt S20 "Füllen der offenen Gussräume mit Beton zur Formung von Längsbalken und Querbalken" werden die an der Oberseite 134 der Gussform 130 offenen Gussräume 132a, 132b, 132c mit Beton gefüllt. Beim Füllvorgang wird Frischbeton an der Oberseite 134 der Gussform 130 solange in die Gussräume 132a, 132b, 132c eingefüllt, bis die Gussräume 132a, 132b, 132c bis zur Oberseite 134 der Gussform 130 mit Beton ausgefüllt sind. An der Oberseite 134 entsteht somit die freiliegende Betonoberfläche 147 des Längsspaltentrostelements 140.

Während des Füllens der offenen Gussräume 132a, 132b, 132c wird die Gussform 130 mit Hilfe des Rütteltisches 110 gerüttelt (Schritt S30 "Rütteln der Gussform während des Füllvorgangs"). Auf diese Weise wird der Beton in den Gussräumen 132a, 132b, 132c gleichmäßig verteilt und verdichtet. Nachdem die Gussräume 132a, 132b, 132c vollständig ausgefüllt sind, wird der Rüttelvorgang beendet. Sofern erforderlich, wird die an der Oberseite 134 freiliegende Betonoberfläche 147 weiter glatt gestrichen. Um die Griffigkeit der Betonoberfläche zu erhöhen, kann in einem optionalen Verfahrensschritt die Betonoberfläche mit Split oder Quarzsand bestreut oder mit Hilfe eines Besens gleichmäßig aufgeraut werden.

Im anschließenden Schritt S40 "An der Oberfläche der Längsbalken lokales Eindrücken wenigstens eines eine Oberflächenstruktur erzeugenden Prägeelements in den Beton der Längsbalken" wird die freiliegende Betonobertläche 147 mit Hilfe der Eindrückeinrichtung 160 weiter strukturiert. Der Eindrückvorgang wird durchgeführt solange der Beton in den Gussräumen 132a- 132b, 132c frisch ist (also noch nicht teilweise ausgehärtet ist). Hierzu wird die Eindrückeinrichtung 160 in Richtung der Oberfläche 134 der Gussform 130 bzw. der freiliegenden Oberfläche 147 so weit abgesenkt, bis eine Unterkante der Lagereinrichtung 168 einen voreinstellbaren Höhenabstand H1 zur Oberseite 134 der Gussform bzw. freiliegenden Oberfläche 147 erreicht hat (siehe Fig. 4a). Durch das Absenken der Eindrückeinrichtung 160 auf den Höhenabstand H1, werden lediglich die Spitzen A der Prägeelemente 162a-c, 164a-c, 166a-c in den Frischbeton eingedrückt, nicht jedoch die Eindrückeinrichtung als Ganzes. Somit kann der Eindrückvorgang auf bestimmte Oberflächenbereiche beschränkt bleiben. Die Spitzentiefe t der Prägeelemente 162a-c, 164a-c, 166a-c ist derart gewählt, dass die Prägeelemente 162a-c, 164a-c, 166a-c beim Eindrückvorgang Rillen 142a-c, 144a-c. 146a-c mit einer vorgegebenen Tiefe t1 und einer vorgegebenen Oberflächenbreite a1 erzeugen (siehe Fign 4b und 5a). Typische Eindrücktiefen t1 liegen im Bereich von 2-15 mm, bevorzugt im Bereich zwischen 2 bis 10 mm, noch bevorzugter im Bereich zwischen 2-5 mm. Typische Oberflächenbreiten a1 der Rillen 142a-c, 144a-c. 146a-c liegen im Bereich zwischen 3-10 mm, bevorzugt im Bereich zwischen 3-6 mm (siehe Fig. 4b).

Im darauffolgenden Schritt S50 "Entfernen des wenigstens einen in den Beton eingedrückten Prägeelements" wird die Eindrückeinrichtung 160 wieder angehoben (z.B. auf einen vorgegebenen Höhenwert H2), wodurch die Prägeelemente 162a-c, 164a-c, 166a-c aus den eingedrückten Rillen 142a-c, 144a-c. 146a-c entfernt werden. Durch Entfernen der Prägeelemente 162a-c, 164a-c, 166a-c bleiben die im Beton eingedrückten Dreikantrillen 142a-c, 144a-c. 146a-c zurück, welche sich in Längsrichtung der Längsbalken 142, 144, 146 erstrecken. Diese geben der Betonoberfläche 147 die gewünschte furchige Oberflächencharakteristik zur Verbesserung der Griffigkeit (vgl. Fign. 4b, 5a, 5b). Der Verfahrensschritt des Anhebens der Eindrückeinrichtung 160 kann unmittelbar nach dem Eindrückvorgang erfolgen, d.h., solange der Beton noch frisch und nicht teilweise ausgehärtet ist. Um ein Zerlaufen der frisch eingedrückten Rillen 144a-c zu verhindern, wird ein Beton oder Betonmischung verwendet, die im frischen Zustand seine Konsistenz behält. Die Eindrückzeit kann auf wenige Sekunden bis Minuten beschränkt bleiben.

In einem abschließenden Schritt S60 "Lösen des so geformten Längsspaltenrostelements von der Gussform" wird das geformte und obertlächenstruktunerte Längsspaltenrostelement 140 von der Gussform 130 gelöst. Hierzu wird die Gussform 130 mit Hilfe der Kippeinrichtung um 180° gedreht, so dass die freiliegende, strukturierte Oberfläche 147 nach unten zeigt. Im Anschluss wird dann das Längsspaltenrostelement 140 aus der Gussform 130 nach unten entschalt werden (in Fig. 1 nicht dargestellt).

Die Vorteile der erfindungsgemäßen Eindrücktechnik wird anhand der Figuren 4a und 4b weiter beschrieben.

Wie in Fig. 4a dargestellt ist, werden lediglich die Prägeelemente 162a-c, 164a-c, 166a-c in den Frischbeton eingedrückt, während die Lagereinrichtung 168 die Oberfläche 147 des Längsspaltenrostelements 140 nicht berührt. Somit kann verhindert werden, dass die Oberfläche 147 durch den Eindrückvorgang als Ganzes verformt wird. Vielmehr wird die Oberfläche 147 lediglich an den vorgesehenen Eindrückstellen lokal verformt, wodurch die hier beschriebene Eindrücktechnik die Realisierung einer jeden beliebigen Oberflächenstruktur in bester Qualität ermöglicht. Der Ausschuss an Längsspaltenrostelementen 140 aufgrund misslungener oder fehlerhafter Oberflächenstrukturierung kann somit gering gehalten werden.

Die beschriebene dreieckförmige Form der Prägeelemente 162a-c, 164a-c, 166a-c ermöglicht ferner einen schonenden Prägevorgang. Die dreieckförmigen Spitzen A dringen schonend in den Frischbeton ein und verdrängen diesen schrittweise lateral nach außen. Durch den sanften Verdrängungsvorgang wird der Beton entlang der den Winkel α bildenden Rillenkanten 141, 143 weiter verdichtet und somit gestärkt (vgl. Fig. 4b). Die Festigkeit der Betonoberfläche und die Qualität der Rillen wird somit weiter gesteigert. Insbesondere wird durch den beschriebenen Eindrückvorgang das Betongefüge nicht geschädigt, wie es beispielsweise bei einem Schneiden oder Fräsen von Rillen häufig der Fall ist.

Ein weiterer Nutzen der hier beschriebenen dreieckförmigen Form der Prägeelemente 162a-c, 164a-c, 166a-c liegt darin, dass am Ort der eingedrückten Rillen 142a-c, 144a-c. 146a-c an der Oberfläche 147 keine spitze Kanten entstehen. Die schräg nach Unten zulaufenden Rillenkanten 141, 143 bilden mit der horizontalen Oberfläche 147 einen stumpfen Winkel β, welcher 90° überschreitet (vgl. Fig. 4b). Auf diese Weise werden scharfe Übergänge vermieden, wodurch der Komfort für Tiere wesentliche erhöht wird.

Ein weiterer Nutzen der hier beschriebenen dreieckförmigen Gestalt der Prägeelemente 162a-c, 164a-c, 166a-c und eingedrückten Rillen 142a-c, 144a-c, 146a-c besteht darin, dass durch den Eindruckvorgang die Betonoberfläche nur lokal modifiziert wird und durch die dreieckförmige Gestalt das verdrängte Betonvolumen sehr gering ist. Unter der Annahme, dass die eingedrückte Rillen 142a-c, 144a-c. 146a-c jeweils eine Tiefe von 3 mm, eine Breite von 4 mm an der Oberfläche sowie eine Länge von 1000 mm aufweist (was in etwa der Länge des Längsspaltenrostelement 140 entspricht), beträgt das durch eine Rille 142a-c, 144a-c, 146a-c verdrängte Betonvolumen in der Nähe der Oberfläche 147 des Längsspaltenrostelements 140 gemäß der Gleichung Vᵣ = 1/2 · 3 mm · 4 mm · 1000 mm ungefähr 6000 mm³. Unter der weiteren Annahme, dass der Abstand jeder Rille 142a-c, 144a-c, 146a-c zu einer benachbarten Rille bzw. zu einer Kante des Längsspaltenrostelements 140 in etwa 40 mm beträgt und dass das durch eine jede Rille 142a-c, 144a-c, 146a-c verdrängte Volumen lokal an der Oberfläche in den benachbarten unstrukturierten Bereich gleichmäßig verdrängt wird, so gilt unter der Annahme einer gleichförmigen Verdrängung in einem benachbarten, quaderförmigen Bereich die Beziehung: 1000 mm · 40 mm · Δh = 6000 mm³. Daraus ergibt sich durch Auflösung der Gleichung eine Höhendifferenz Δh = 6000 : 40000 = 0,15 mm. Daraus folgt, dass die Zunahme der Höhe der Betonoberfläche 147 aufgrund des verdrängten Betonvolumens während des Eindrückvorgangs lediglich 150 µm beträgt, was zu vernachlässigen ist. Da das verdrängte Betonvolumen leicht durch die unmittelbare Oberflächenumgebung aufgenommen werden kann, ohne dass die Höhe des Längsspaltenrostelements 140 wesentlich zunimmt, müssen bei der Herstellung somit keine Vorkehrungen getroffen werden, um das verdrängte Betonvolumen aufzunehmen oder abfließen zu lassen.

Nachdem im Zusammenhang mit den Fign. 4a und 4b der Vorteil der hier beschriebenen Eindrücktechnik diskutiert wurden, werden im Zusammenhang mit den Figuren 5a -5e unterschiedliche Prägestrukturen weiter diskutiert.

In den Fign. 5a und 5b ist das Längsspaltenrostelement 140 dargestellt, wie es beispielsweise mit der beschriebenen Eindrückeinrichtung 160 realisierbar ist. Fig. 5a zeigt eine 3D-Ansicht des Längsspaltenrostelements 140, während in Fig. 5b das Längsspaltenrostelement 140 nochmals in einer Draufsicht gezeigt ist. Es weist drei Längsbalken 142, 144, 146 und drei Querbalken 141, 143, 145 auf. Die Längsbalken 142, 144, 146 weisen eine Oberflächenstruktur 150 auf, die pro Längsbalken 142, 144, 146 jeweils drei geradlinige Rillen 142a-c, 144a-c, 146a-c mit dreieckförmigen Querschnittsprofil umfasst.

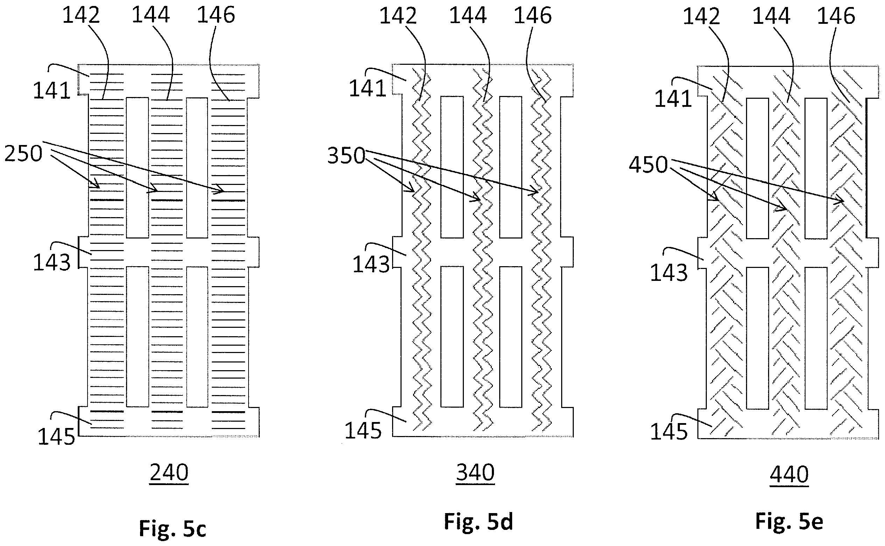

Alternativ zu dem in den Fign. 5a und 5b dargestellten geradlinigen Verlauf der eingedrückten Rillen entlang der Längsbalken 142, 144, 146, können die Rillen senkrecht zur Richtung der Längsbalken 142, 144, 146 angeordnet sein. Eine derartige Oberflächenstruktur 250 ist in Fig. 5c dargestellt.

Gemäß einer weiteren Ausführung können die eingedrückten Rillen in Bezug zu den Längsbalkenkanten schräg ausgerichtet sein. In Fig. 5d ist beispielsweise eine Oberflächenstruktur 350 gezeigt, bei der die eingedrückten Rillen entlang der Längsbalken 142, 144, 146 eine Zick-Zack-Linienform nachbilden. Alternativ zu dieser Zick-Zack-Linienform ist auch eine Wellenform denkbar.

In Fig. 5e ist eine Oberflächenstruktur 450 gezeigt, bei der entlang der Längsbalken 142, 144, 146 Domänen unterschiedlicher Rillenorientierung sich abwechseln. Durch eine derartige Struktur kann die Bodengriffigkeit erheblich verbessert werden.

Allen hier beschriebenen Oberflächenstrukturen 150, 250, 350, 450 ist gemeinsam, dass die eingedrückten Rillen ein dreieckförmiges Querschnittsprofil aufweisen, wie in Zusammenhang mit den Fign. 3, 4a-4b weiter oben beschrieben wurde. Sie unterscheiden sich lediglich in der Ausrichtung (Orientierung) und Länge der Rillen. Alle hier beschriebenen Oberflächenstrukturen 150, 250, 350, 450 können mit der in Fig. 1 gezeigten Vorrichtung 100 realisiert werden. Es müssen lediglich die Ausrichtung und Längenabmessungen der Prägeelemente der zu realisierenden Oberflächenstruktur angepasst werden.

## Patentansprüche

1. Verfahren zum Herstellen eines Längsspaltenrostelements (140) aus Beton, das wenigstens zwei voneinander beabstandete und in einer Ebene angeordnete Längsbalken (142, 144, 146) und wenigsten zwei voneinander beabstandete und in der Ebene der Längsbalken (142, 144, 146) angeordnete und die wenigstens zwei Längsbalken (142, 144, 146) kreuzende Querbalken (141, 143, 145) umfasst, wobei durch zwei benachbarte Längsbalken (142, 144, 146) und zwei benachbarte Querbalken (141, 143, 145) jeweils ein Längsspalt definiert ist, wobei das Verfahren folgende Schritte umfasst:
Bereitstellen einer Gussform (130) auf einem Rütteltisch (110), wobei die Gussform (130) nach oben offene Gussräume (132a-c) aufweist, welche die Form der Längsbalken (142, 144, 146) und Querbalken (141, 143, 145) vorgeben;
Füllen der offenen Gussräume (132a-c) mit Beton zur Formung der Längsbalken (142, 144, 146) und Querbalken (141, 143, 145);
Rütteln der Gussform (130) während des Füllvorgangs, um eine gleichförmige Betonverteilung in den Gussräumen (132a-c) zu erreichen;
Erzeugen einer Oberflächenstruktur (150, 250, 350, 450) wenigstens entlang der Längsbalken (142, 144, 146), indem an der freiliegenden Oberfläche der Längsbalken (142, 144, 146) wenigstens ein eine Oberflächenstruktur (150, 250, 350, 450) erzeugendes Prägeelement (162) in den Beton der Längsbalken (142, 144, 146) lokal eingedrückt wird, wobei die Oberflächenstruktur (150, 250, 350, 450) durch Ausüben einer Vibrationsbewegung auf das wenigstens eine Prägeelement (162) erzeugt wird;
Entfernen des wenigstens einen in den Beton eingedrückten Prägeelements (162); und
Lösen des so geformten Längsspaltenrostelements (140) von der Gussform (130).

2. Verfahren nach Anspruch 1, wobei die Oberflächenstruktur (150, 250, 350, 450) nach Beendigung des Füll- und Rüttelvorgangs im Frischbeton erzeugt wird.

3. Verfahren nach Anspruch 1 oder 2, wobei die Oberflächenstruktur (150, 250, 350, 450) ferner durch Anlegen einer Druckkraft auf das wenigstens eine Prägeelement (162) erzeugt wird.

4. Verfahren nach einem der vorhergehenden Ansprüche, ferner umfassend:
Aufrauen der Oberfläche des Längsspaltenrostelements (140) bevor die Oberflächenstruktur (150, 250, 350, 450) eingedrückt wird.

5. Verfahren nach einem der vorhergehenden Ansprüche, wobei das wenigstens eine Prägeelement (162) derart dimensioniert und ausgebildet ist, dass es beim Eindrückvorgang die freiliegende Oberfläche des Längsspaltenrostelements (140) lediglich an den Eindrückstellen lokal verformt.

6. Verfahren nach einem der vorhergehenden Ansprüche, wobei die eingedrückte Oberflächenstruktur (150, 250, 350, 450) wenigstens eine Rille (142a-c, 144a-c, 146a-c) mit dreiecksförmigen Querschnittsprofil umfasst.

7. Verfahren nach Anspruch 6, wobei die wenigstens eine Rille (142a-c, 144a-c, 146a-c) eine Spitze aufweist, die einen Winkel im Bereich zwischen 45° und 90° einschließt.

8. Verfahren nach einem der vorhergehenden Ansprüche, wobei der Schritt des Erzeugens einer Oberflächenstruktur (150, 250, 350, 450) ferner ein dem Eindrücken vorausgehendes Ausrichten des wenigstens einen Prägeelements (162) relativ zum Längsspaltenrostelement (140) umfasst.

9. Verfahren nach Anspruch 8, wobei die Oberflächenstruktur (150, 250, 350, 450) parallel, senkrecht oder schräg in einem vorgegebenen Winkel bezüglich einer Längsrichtung der Längsbalken (142, 144, 146) orientiert ist.

10. Verfahren nach einem der vorhergehenden Ansprüche, wobei die Oberflächenstruktur (150, 250, 350, 450) wenigstens zwei Rillen (142a-c, 144a-c, 146a-c) pro Längsbalken (142, 144, 146) aufweist, und die wenigstens zwei Rillen (142a-c, 144a-c, 146a-c) in einem Eindrückschritt gleichzeitig erzeugt werden.

11. Verfahren nach einem der vorhergehenden Ansprüche, wobei der Schritt des Lösens des Längsspaltenelements von der Gussform (130) umfasst:
Drehen der Gussform (130), so dass die freiliegende Oberfläche des Längsspaltenrostelements (140) mit den eingedrückten Oberflächenstrukturen (150, 250, 350, 450) nach unten zeigt; und
anschließendes Entschalen des Längsspaltenrostelements (140) nach unten aus der Gussform (130).

12. Vorrichtung zur Herstellung eines Längsspaltenrostelements (140) aus Beton, das wenigstens zwei voneinander beabstandete und in einer Ebene angeordnete Längsbalken (142, 144, 146) und wenigsten zwei voneinander beabstandete und in der Ebene der Längsbalken (142, 144, 146) angeordnete und die wenigstens zwei Längsbalken (142, 144, 146) kreuzende Querbalken (141, 143, 145) umfasst, wobei durch zwei benachbarte Längsbalken (142, 144, 146) und zwei benachbarte Querbalken (141, 143, 145) jeweils ein Längsspalt definiert ist, wobei die Vorrichtung umfasst:
eine Gussform (130) mit der Form des Längsspaltenrostelements (140) entsprechenden, nach oben offenen Gussräumen (132a-c), welche dazu vorgesehen sind, den bei einem Füllvorgang bereitgestellten Beton aufzunehmen; und
einen Rütteltisch (110), auf den die Gussform (130) aufgelegt ist, wobei der Rütteltisch (110) dazu ausgebildet ist, die Gussform (130) während des Füllvorgangs zu rütteln, um eine gleichmäßige Betonverteilung in den Gussräumen (132a-c) zu erreichen;
**dadurch gekennzeichnet, dass** eine Eindrückeinrichtung (160) mit wenigstens einem Prägeelement (162) vorgesehen ist, wobei die Eindrückeinrichtung (160) dazu vorgesehen ist, das wenigstens eine Prägeelement (162) in den Beton der Längsbalken (142, 144, 146) lokal einzudrücken, um eine Oberflächenstruktur (150, 250, 350, 450) an der freiliegenden Oberfläche der Längsbalken (142, 144, 146) zu erzeugen, wobei die Vorrichtung ferner Mittel zum Ausüben einer Vibrationsbewegung auf das wenigstens eine Prägeelement (162) umfasst, um die Oberflächenstruktur (150, 250, 350, 450) zu erzeugen.

13. Vorrichtung nach Anspruch 12, wobei das wenigstens eine Prägeelement (162) derart dimensioniert ist, dass es beim Eindrückvorgang ein Betonvolumen verdrängt, das im Vergleich zum Betonvolumen des Längsrostspaltelements vernachlässigbar ist.

14. Vorrichtung nach Anspruch 12 oder 13, wobei das wenigstens eine Prägeelement (162) stabförmig ausgebildet ist und eine im Querschnitt dreieckförmige Spitze aufweist.

15. Vorrichtung nach Anspruch 14, wobei die dreieckförmige Spitze einen Winkel im Bereich zwischen 45° und 90° bildet.

16. Vorrichtung nach einem der Ansprüche 12 bis 15, wobei die Eindrückeinrichtung (160) ferner wenigstens eine der folgenden Einrichtungen umfasst:
eine Druckeinrichtung, welche dazu vorgesehen ist, das wenigstens eine Prägeelement (162) mit einem Druck zu beaufschlagen;
eine Orientierungseinrichtung, welche dazu vorgesehen ist, das wenigstens eine Prägeelement (162) bezüglich des Längsspaltenrostelements (140) auszurichten.

17. Vorrichtung nach einem der Ansprüche 12 bis 16, ferner umfassend eine Steuereinrichtung, welche dazu vorgesehen ist, die Eindrückeinrichtung (160) anzusteuern, um den Eindrückvorgang durchzuführen.

18. Vorrichtung nach einem der Ansprüche 12 bis 17, ferner umfassend:
eine Kippeinrichtung, welche dazu vorgesehen ist, die Gussform (130) zu drehen, so dass die Oberfläche des Längsspaltenrostelements (140) mit den eingedrückten Oberflächenstrukturen (150, 250, 350, 450) nach unten zeigt, und anschließend entschalbar ist.

19. Längsspaltenrostelement (140) aus Beton, das wenigstens zwei voneinander beabstandete und in einer Ebene angeordnete Längsbalken (142, 144, 146) und wenigsten zwei voneinander beabstandete und in der Ebene der Längsbalken (142, 144, 146) angeordnete und die wenigstens zwei Längsbalken (142, 144, 146) kreuzende Querbalken (141, 143, 145) umfasst, wobei durch zwei benachbarte Längsbalken (142, 144, 146) und zwei benachbarte Querbalken (141, 143, 145) jeweils ein Längsspalt definiert ist, wobei wenigstens die Oberfläche der Längsspalten eine oder mehrere lokale Vertiefungen aufweist,
**dadurch gekennzeichnet, dass** die lokalen Vertiefungen jeweils ein dreieckförmiges Querschnittsprofil aufweisen, wobei die eine oder mehreren Vertiefungen an der Oberfläche durch Ausüben einer Vibrationsbewegung auf wenigstens ein dreieckförmiges Prägeelement (162) entstanden sind.

20. Längsspaltenrostelement (140) nach Anspruch 19, wobei jede der dreieckförmigen Vertiefungen eine im Beton eingedrückte Spitze aufweist, welche einen Winkel im Bereich zwischen 45° und 90° aufweist.

## Claims

1. Method for producing a longitudinal slotted grating element (140) from concrete, which element comprises at least two mutually spaced longitudinal beams (142, 144, 146) arranged in a plane and at least two mutually spaced transverse beams (141, 143, 145) arranged in the plane of the longitudinal beams (142, 144, 146) and crossing the at least two longitudinal beams (142, 144, 146), a longitudinal slot being defined in each case by two adjacent longitudinal beams (142, 144, 146) and two adjacent transverse beams (141, 143, 145), the method comprising the following steps:
providing a casting mould (130) on a vibrating table (110), the casting mould (130) having casting spaces (132a-c) which are open at the top and which determine the shape of the longitudinal beams (142, 144, 146) and transverse beams (141, 143, 145);
filling the open casting spaces (132a-c) with concrete to form the longitudinal beams (142, 144, 146) and transverse beams (141, 143, 145);
vibrating the casting mould (130) during the filling process in order to achieve a uniform distribution of concrete in the casting spaces (132a-c);
generating a surface structure (150, 250, 350, 450) at least along the longitudinal beams (142, 144, 146) by at least one stamping element (162) that produces a surface structure (150, 250, 350, 450) being locally impressed into the concrete of the longitudinal beams (142, 144, 146) on the exposed surface of the longitudinal beams (142, 144, 146), the surface structure (150, 250, 350, 450) being produced by exerting a vibratory movement on the at least one stamping element (162);
removing the at least one stamping element (162) impressed into the concrete; and
releasing the longitudinal slotted grating element (140) thus formed from the casting mould (130).

2. Method according to claim 1, wherein the surface structure (150, 250, 350, 450) is produced in the fresh concrete after completion of the filling and vibrating process.

3. Method according to either claim 1 or claim 2, wherein the surface structure (150, 250, 350, 450) is further produced by the application of a compressive force to the at least one stamping element (162).

4. Method according to any of the preceding claims, further comprising:
roughening the surface of the longitudinal slotted grating element (140) before the surface structure (150, 250, 350, 450) is impressed.

5. Method according to any of the preceding claims, wherein the at least one stamping element (162) is dimensioned and designed in such a way that, during the impression process, it locally deforms the exposed surface of the longitudinal slotted grating element (140) only at the impression points.

6. Method according to any of the preceding claims, wherein the impressed surface structure (150, 250, 350, 450) comprises at least one groove (142a-c, 144a-c, 146a-c) having a triangular cross-sectional profile.

7. Method according to claim 6, wherein the at least one groove (142a-c, 144a-c, 146a-c) has a tip that encloses an angle in the range between 45° and 90°.

8. Method according to any of the preceding claims, wherein the step of generating a surface structure (150, 250, 350, 450) further comprises aligning the at least one stamping element (162) relative to the longitudinal slotted grating element (140) prior to the impression.

9. Method according to claim 8, wherein the surface structure (150, 250, 350, 450) is oriented parallel, perpendicularly or obliquely at a predetermined angle with respect to a longitudinal direction of the longitudinal beams (142, 144, 146).

10. Method according to any of the preceding claims, wherein the surface structure (150, 250, 350, 450) comprises at least two grooves (142a-c, 144a-c, 146a-c) per longitudinal beam (142, 144, 146), and the at least two grooves (142a-c, 144a-c, 146a-c) are produced simultaneously in one impression step.

11. Method according to any of the preceding claims, wherein the step of releasing the longitudinal slotted element from the mould (130) comprises:
rotating the casting mould (130) so that the exposed surface of the longitudinal slotted grating element (140) having the impressed surface structures (150, 250, 350, 450) faces downwards; and
then demoulding the longitudinal slotted grating element (140) downwards out of the casting mould (130).

12. Device for producing a longitudinal slotted grating element (140) from concrete, which element comprises at least two mutually spaced longitudinal beams (142, 144, 146) arranged in a plane and at least two mutually spaced transverse beams (141, 143, 145) arranged in the plane of the longitudinal beams (142, 144, 146) and crossing the at least two longitudinal beams (142, 144, 146), a longitudinal slot being defined in each case by two adjacent longitudinal beams (142, 144, 146) and two adjacent transverse beams (141, 143, 145), the device comprising:
a casting mould (130) having casting spaces (132a-c) which correspond to the shape of the longitudinal slotted grating element (140), are open at the top, and are provided for receiving the concrete provided during a filling process; and
a vibrating table (110) on which the casting mould (130) is placed, the vibrating table (110) being designed to vibrate the casting mould (130) during the filling process in order achieve an even distribution of the concrete in the casting spaces (132a-c);
**characterised in that** an impression device (160) having at least one stamping element (162) is provided, the impression device (160) being provided for locally impressing the at least one stamping element (162) into the concrete of the longitudinal beams (142, 144, 146) in order to generate a surface structure (150, 250, 350, 450) on the exposed surface of the longitudinal beams (142, 144, 146), the device further comprising means for exerting a vibratory movement on the at least one stamping element (162) in order to generate the surface structure (150, 250, 350, 450).

13. Device according to claim 12, wherein the at least one stamping element (162) is dimensioned in such a way that, during the impression process, it displaces a concrete volume which is negligible in comparison to the concrete volume of the longitudinal slotted grating element.

14. Device according to either claim 12 or claim 13, wherein the at least one stamping element (162) is rod-shaped and has a tip that is triangular in cross-section.

15. Device according to claim 14, wherein the triangular tip forms an angle in the range between 45° and 90°.

16. Device according to any of claims 12 to 15, wherein the impression device (160) further comprises at least one of the following devices:
a pressure device which is provided for applying pressure to the at least one stamping element (162);
an orientation device which is provided for aligning the at least one stamping element (162) with respect to the longitudinal slotted grating element (140).

17. Device according to any of claims 12 to 16, further comprising a control device which is provided for controlling the impression device (160) in order to carry out the impression process.

18. Device according to any of claims 12 to 17, further comprising:
a tilting device which is provided for rotating the casting mould (130) such that the surface of the longitudinal slotted grating element (140) having the impressed surface structures (150, 250, 350, 450) faces downwards and can then be demoulded.

19. Longitudinal slotted grating element (140) made of concrete, which element comprises at least two mutually spaced longitudinal beams (142, 144, 146) arranged in a plane and at least two mutually spaced transverse beams (141, 143, 145) arranged in the plane of the longitudinal beams (142, 144, 146) and crossing the at least two longitudinal beams (142, 144, 146), a longitudinal slot being defined in each case by two adjacent longitudinal beams (142, 144, 146) and two adjacent transverse beams (141, 143, 145), at least the surface of the longitudinal slot comprising one or more local depressions, **characterised in that** the local depressions each have a triangular cross-sectional profile, the one or more depressions being created on the surface by the exertion of a vibratory movement on at least one triangular stamping element (162).

20. Longitudinal slotted grating element (140) according to claim 19, wherein each of the triangular depressions has a point impressed in the concrete which has an angle in the range between 45° and 90°.

## Revendications

1. Procédé pour la fabrication d'un élément de grille à colonnes longitudinales (140) en béton, lequel comporte au moins deux poutres longitudinales (142, 144, 146) espacées les unes des autres et disposées dans un plan et au moins deux poutres transversales (141, 143, 145) espacées les unes des autres et disposées dans le plan des poutres longitudinales (142, 144, 146) et croisant les au moins deux poutres longitudinales (142, 144, 146), dans lequel est définie respectivement une colonne longitudinale par deux poutres longitudinales (142, 144, 146) adjacentes et deux poutres transversales (141, 143, 145) adjacentes, le procédé comportant les étapes suivantes :
la préparation d'un moule de coulée (130) sur une table vibrante (110), le moule de coulée (130) comprenant des espaces de coulée ouverts vers le haut (132a-c), lesquels prédéfinissent la forme des poutres longitudinales (142, 144, 146) et des poutres transversales (141, 143, 145) ; le remplissage des espaces de coulée ouverts (132a-c) avec du béton pour le moulage des poutres longitudinales (142, 144, 146) et des poutres transversales (141, 143, 145) ;
la vibration du moule de coulée (130) pendant le processus de remplissage afin d'atteindre une répartition du béton uniforme dans les espaces de coulée (132a-c) ;
la création d'une structure de surface (150, 250, 350, 450) au moins le long des poutres longitudinales (142, 144, 146) du fait que, sur la surface exposée des poutres longitudinales (142, 144, 146), au moins un élément d'estampage (162) créant une structure de surface (150, 250, 350, 450) est enfoncé localement dans le béton des poutres longitudinales (142, 144, 146), la structure de surface (150, 250, 350, 450) étant créée par exercice d'un mouvement vibratoire sur l'au moins un élément d'estampage (162) ;
le retrait de l'au moins un élément d'estampage (162) enfoncé dans le béton ; et
la libération de l'élément de grille à colonnes longitudinales (140) ainsi moulé du moule de coulée (130).

2. Procédé selon la revendication 1, dans lequel la structure de surface (150, 250, 350, 450) est créée dans le béton frais après terminaison du processus de remplissage et de vibration.

3. Procédé selon la revendication 1 ou la revendication 2, dans lequel la structure de surface (150, 250, 350, 450) est créée en outre par application d'une force de pression sur l'au moins un élément d'estampage (162).

4. Procédé selon l'une des revendications précédentes, comportant en outre :
l'abrasion de la surface de l'élément de grille à colonnes longitudinales (140) avant que la structure de surface (150, 250, 350, 450) soit enfoncée.

5. Procédé selon l'une des revendications précédentes, dans lequel l'au moins un élément d'estampage (162) est dimensionné et conçu de telle sorte que, lors du processus d'enfoncement, il déforme localement la surface exposée de l'élément de grille à colonnes longitudinales (140) uniquement aux emplacements d'enfoncement.

6. Procédé selon l'une des revendications précédentes, dans lequel la structure de surface (150, 250, 350, 450) enfoncée comporte au moins une rainure (142a-c, 144a-c, 146a-c) avec un profil en section transversale triangulaire.

7. Procédé selon la revendication 6, dans lequel l'au moins une rainure (142a-c, 144a-c, 146a-c) comprend une pointe qui forme un angle dans la gamme comprise entre 45° et 90°.

8. Procédé selon l'une des revendications précédentes, dans lequel l'étape de la création d'une structure de surface (150, 250, 350, 450) comporte en outre une orientation, préalable à l'enfoncement, de l'au moins un élément d'estampage (162) par rapport à l'élément de grille à colonnes longitudinales (140).

9. Procédé selon la revendication 8, dans lequel la structure de surface (150, 250, 350, 450) est orientée parallèlement, perpendiculairement ou obliquement en formant un angle prédéfini par rapport à une direction longitudinale des poutres longitudinales (142, 144, 146).

10. Procédé selon l'une des revendications précédentes, dans lequel la structure de surface (150, 250, 350, 450) comprend au moins deux rainures (142a-c, 144a-c, 146a-c) par poutre longitudinale (142, 144, 146), et les au moins deux rainures (142a-c, 144a-c, 146a-c) sont créées simultanément dans une étape d'enfoncement.

11. Procédé selon l'une des revendications précédentes, dans lequel l'étape de la libération de l'élément à colonnes longitudinales du moule de coulée (130) comporte :
la rotation du moule de coulée (130) de sorte que la surface exposée de l'élément de grille à colonnes longitudinales (140) se présente avec les structures de surface enfoncées (150, 250, 350, 450) vers le bas ; et
le décoffrage subséquent de l'élément de grille à colonnes longitudinales (140) vers le bas du moule de coulée (130).

12. Dispositif pour la fabrication d'un élément de grille à colonnes longitudinales (140) en béton, lequel comporte au moins deux poutres longitudinales (142, 144, 146) espacées les unes des autres et disposées dans un plan et au moins deux poutres transversales (141, 143, 145) espacées les unes des autres et disposées dans le plan des poutres longitudinales (142, 144, 146) et croisant les au moins deux poutres longitudinales (142, 144, 146), dans lequel est définie respectivement une colonne longitudinale par deux poutres longitudinales (142, 144, 146) adjacentes et deux poutres transversales (141, 143, 145) adjacentes, le dispositif comportant :
un moule de coulée (130) avec des espaces de coulée ouverts vers le haut (132a-c) correspondant à la forme de l'élément de grille à colonnes longitudinales (140), lesquels sont prévus pour recevoir le béton préparé lors d'un processus de remplissage ; et
une table vibrante (110), sur laquelle est posé le moule de coulée (130), la table vibrante (110) étant conçue pour faire vibrer le moule de coulée (130) pendant le processus de remplissage afin d'atteindre une répartition du béton uniforme dans les espaces de coulée (132a-c) ;
**caractérisé**
**en ce qu'**il est prévu un dispositif d'enfoncement (160) avec au moins un élément d'estampage (162), le dispositif d'enfoncement (160) étant prévu pour enfoncer localement l'au moins un élément d'estampage (162) dans le béton des poutres longitudinales (142, 144, 146) afin de créer une structure de surface (150, 250, 350, 450) sur la surface exposée des poutres longitudinales (142, 144, 146), le dispositif comportant en outre des moyens pour l'exercice d'un mouvement vibratoire sur l'au moins un élément d'estampage (162) afin de créer la structure de surface (150, 250, 350, 450).

13. Dispositif selon la revendication 12, dans lequel l'au moins un élément d'estampage (162) est dimensionné de telle sorte que, lors du processus d'enfoncement, il déplace un volume de béton qui est négligeable en comparaison avec le volume de béton de l'élément de grille à colonnes longitudinales.

14. Dispositif selon la revendication 12 ou la revendication 13, dans lequel l'au moins un élément d'estampage (162) est conçu sous forme de tige et comprend une pointe triangulaire en section transversale.

15. Dispositif selon la revendication 14, dans lequel la pointe triangulaire forme un angle dans la gamme comprise entre 45° et 90°.

16. Dispositif selon l'une des revendications 12 à 15, dans lequel le dispositif d'enfoncement (160) comporte en outre au moins l'un des dispositifs suivants :
un dispositif de compression, lequel est prévu pour soumettre l'au moins un élément d'estampage (162) à une pression ;
un dispositif d'orientation, lequel est prévu pour orienter l'au moins un élément d'estampage (162) par rapport à l'élément de grille à colonnes longitudinales (140).

17. Dispositif selon l'une des revendications 12 à 16, comportant en outre un dispositif de commande, lequel est prévu pour commander le dispositif d'enfoncement (160) afin de mettre en œuvre le processus d'enfoncement.

18. Dispositif selon l'une des revendications 12 à 17, comportant en outre :
un dispositif d'inclinaison, lequel est prévu pour faire tourner le moule de coulée (130) de sorte que la surface de l'élément de grille à colonnes longitudinales (140) se présente avec les structures de surface enfoncées (150, 250, 350, 450) vers le bas, et puisse être par la suite décoffrée.

19. Élément de grille à colonnes longitudinales (140) en béton, lequel comporte au moins deux poutres longitudinales (142, 144, 146) espacées les unes des autres et disposées dans un plan et au moins deux poutres transversales (141, 143, 145) espacées les unes des autres et disposées dans le plan des poutres longitudinales (142, 144, 146) et croisant les au moins deux poutres longitudinales (142, 144, 146), dans lequel est définie respectivement une colonne longitudinale par deux poutres longitudinales (142, 144, 146) adjacentes et deux poutres transversales (141, 143, 145) adjacentes, dans lequel au moins la surface des colonnes longitudinales comprend un ou plusieurs creux locaux, **caractérisé en ce que** les creux locaux présentent respectivement un profil en section transversale triangulaire, dans lequel les un ou plusieurs creux sont apparus sur la surface par exercice d'un mouvement vibratoire sur au moins un élément d'estampage (162) triangulaire.

20. Élément de grille à colonnes longitudinales (140) selon la revendication 19, dans lequel chacun des creux triangulaires comprend une pointe enfoncée dans le béton, laquelle forme un angle dans la gamme comprise entre 45° et 90°.
